(19) Europäisches Patentamt
European Patent Office
Office européen des brevets

(11) Veröffentlichungsnummer: **0 006 598**
**B1**

(12) # EUROPÄISCHE PATENTSCHRIFT

(45) Veröffentlichungstag der Patentschrift: **20.01.82**

(51) Int. Cl.³: **C 07 C 69/145,** A 01 N 37/02

(21) Anmeldenummer: **79102080.3**

(22) Anmeldetag: **25.06.79**

(54) **Verwendung von (Z)9-Tetradecenylacetat und/oder (Z)9, E(12)-Tetradecadienylacetat zur Anlockung und Bekämpfung von Panolis flammea.**

(30) Priorität: **29.06.78 DE 2828545**

(43) Veröffentlichungstag der Anmeldung: **09.01.80 Patentblatt 80/1**

(45) Bekanntmachung des Hinweises auf die Patenterteilung: **20.01.82 Patentblatt 82/3**

(84) Benannte Vertragsstaaten: **AT DE GB IT SE**

(56) Entgegenhaltungen:
**AGRICULTURAL: BIOLOGICAL CHEMISTRY, Band 39, Nr. 5, Mai 1974, Agricultural Chemical Society of Japan Tokyo (JP)
T. ANDO et al. «Lepidopterous sex attractants», Seiten 1163–1165**

**AGRICULTURE: BIOLOGICAL CHEMISTRY, Band 41, Nr. 8, August 1977, Agricultural Chemical Society of Japan, Tokyo (JP)
T. ANDO et al. «Sex attractants for male lepidoptera», Seiten 1485–1492**

**CHEMICAL ABSTRACTS, Band 90 Nr. 11, 12. März 1979, Ref. 83 958a, Seite 332 Columbus, Ohio (USA)
E. PRIESNER et al. «A sex attractant for the pine beauty moth, Panolis Flammea»**

(73) Patentinhaber: **HOECHST AKTIENGESELLSCHAFT, Postfach 80 03 20, D-6230 Frankfurt/Main 80 (DE)**

(72) Erfinder: **Bestmann, Hans-Jürgen, Prof. Dr., Spitzwegstrasse 31, D-8520 Erlangen (DE)**
Erfinder: **Vostrowsky, Otto, Dr., Schleifweg 17c, D-8521 Uttenreuth (DE)**
Erfinder: **Knauf, Werner, Dr., Völklinger Weg 64, D-6000 Frankfurt/Main 71 (DE)**

**COMPTES-RENDUS DE L'ACADÉMIE DES SCIENCES DE PARIS, Serie D, Band 286, 9. Januar 1978, Gauthiers-Villar Montreuil (FR)
C. DESCOINS: «Sur la sécrétion phéromonale des femelles vierges de Mamestra brassicae L. et de Mamestra Oleracea L. (Lépidoptéres Noctuidae, Hadeninae), Seiten 77–80**

**EXPERIENTA, Band 33, Nr. 11, 15. November 1977, Birkhauser Verlag. Basel (CH)
E. ARSURA: «(Z)-9-Tetradecen-1-01 and (Z)-9-tetradecenyl acetate: A potent attractant system for male Sesamia cretica Led. (Lep., Noctuidae)», Seiten 1423–1424**

(Fortsetzung nächste Seite)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG.

JOURNAL OF ECONOMIC ENTOMOLOGY, Band 63, Nr. 3, Juni 1970, Entomological Society of America College Park, Maryland 20 740 (USA)
A. COMEAU: «Lepidopterous sex attractants discovered by field screening tests», Seiten 969–974

JOURNAL OF ECONOMIC ENTOMOLOGY, Band 69, Nr. 3, Juni 1976, Entomological Society of America, College Park, Maryland (US)
R. E. DOOLITTLE: «Sex Pheromones of Spodoptera exigua, S.eridania and S-frugiperda: Bioassay for Field Activity», Seiten 324–326

# Verwendung von (Z)9-Tetradecenylacetat und/oder Z(9),(E)12-Tetradecadienylacetat zur Anlockung und Bekämpfung von Panolis Flammea

Bei der Suche nach umweltschonenden Methoden der Schädlingsbekämpfung haben seit einigen Jahren die Insektenlockstoffe (Pheromone) steigende Beachtung gefunden. Ihr Vorteil gegenüber herkömmlichen Pflanzenschutzmitteln liegt in ihrer aussergewöhnlichen Selektivität, die jeweils nur auf eine einzige Art, allenfalls auf eine eng begrenzte Zahl von Arten gerichtet ist, andere Arten dagegen unbeeinflusst lässt. Mit Hilfe von Pheromonen ist es daher theoretisch möglich, eine bestimmte Schädlingsart gezielt zu bekämpfen, ohne das ökologische Gleichgewicht mehr als nötig zu stören.

Pheromone werden von zahlreichen Insekten ausgeschieden und üben auf andere Individuen derselben Spezies eine bestimmte Signalwirkung aus. Speziell gilt dies für die Sexualpheromone, die von den Weibchen einer Insektenart produziert werden, um die Männchen derselben Spezies zum Zwecke der Kopulation anzulocken. Dieses Phänomen kann man sich bei der Schädlingsbekämpfung auf dreierlei Weise zunutze machen:

1. durch Auslegung von Duftködern, die über weite Strecken hinweg die Männchen (oder Weibchen) einer Schädlingsart anlocken, so dass sie an Ort und Stelle mit herkömmlichen Mitteln auf bequeme Weise vernichtet werden können («Abfangtechnik»);
2. durch flächenmässige Ausbringung von hohen Konzentrationen des Pheromons, wodurch die zu bekämpfende Insektenpopulation desorientiert und an der Kopulation gehindert wird («Konfusionstechnik»);
3. durch Auslegung von Fallen zur Ermittlung der Besatzdichte einer Schädlingsart in einem bestimmten Gebiet und damit des günstigsten Zeitpunktes für eine Bekämpfung mit konventionellen Methoden («Monitortechnik»).

Zu den volkswirtschaftlich bedeutenden Schadinsekten zählt die zu den Nachtschmetterlingen (Noctuiden) gehörende Kieferneule oder Forleule (Panolis flammea), die in Europa und Asien ein gefürchteter Koniferenschädling ist. Unter günstigen äusseren Bedingungen kommt es zeitweilig zum schnellen Aufbau (Gradation) einer schädlichen Population, was zu schweren Schäden und letztlich zu erheblichen Ertragsminderungen führen kann. Es ist daher von besonderer Bedeutung, die Besatzdichte von P. flammea regelmässig zu überwachen, um den Aufbau einer schädlichen Population frühzeitig zu erkennen und geeignete Gegenmassnahmen treffen zu können.

Eine verlässliche Methode zum sicheren und einfachen Nachweis der Schädlinge vor Beginn des Populationsaufbaus bzw. zu ihrer Bekämpfung fehlte bisher, da der Sexuallockstoff von P. flammea nicht bekannt war.

Es wurde nun gefunden, dass (Z)9-Tetradecenylacetat

(1)

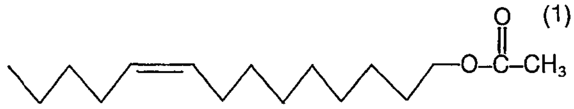

und (Z)9-(E)12-Tetradecadienylacetat

(2)

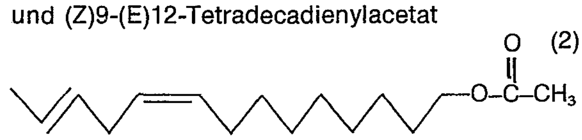

zur selektiven Anlockung von P. flammea-Männchen verwendet werden können, so dass man von einer Pheromonwirkung sprechen kann.

Gegenstand der Erfindung ist daher die Verwendung der genannten Verbindungen zur Anlockung und Bekämpfung von P. flammea.

Aus Z. Naturforschung 30c (1975), 283–293 war zwar bekannt, dass eine Reihe von Estern ein- und mehrfach ungesättigter $C_{12}$- bis $C_{16}$-Alkohole, darunter auch (1) und (2), im Elektroantennogramm(EAG)-test imstande ist, auf isolierte Antennen von P. flammea eine unspezifische Reizwirkung auszuüben. Rückschlüsse auf das Verhalten lebender Tiere gegenüber diesen Substanzen bzw. auf die Identität einer dieser Substanzen mit dem natürlichen Pheromon lassen sich hieraus jedoch nicht ziehen.

Die Verbindungen (1) und (2) lassen sich z.B. gemäss DE-OS 2 355 534 nach dem darin beschriebenen Verfahren durch Zugabe von 9-Acetoxynonanal zu einer aus Triphenyl-pentylphosphoniumbromid bzw. aus Triphenyl-3-pentenylphosphoniumbromid und Kalium in Hexamethylphosphorsäuretrisamid erhaltenen Ylidlösung herstellen.

Zur anwendungsgerechten Formulierung der Wirkstoffe kommen sowohl flüssige wie auch feste Präparationen in Frage. Als Lösungsmittel kommen hochsiedende, aromatische, aliphatische oder cycloaliphatische Verbindungen in Betracht. Neben Kohlenwasserstoffen eignen sich Ester, Äther oder Ketone besonders gut. Typische Vertreter dieser Klassen sind z.B.: Xylol, Methylnaphthaline, Paraffinöle, Cyclohexan, Cyclohexanon, Äthylglykolacetat, Isophoron und Dibutylphthalat. Diese Lösungsmittel können alleine oder in Mischungen mit anderen Komponenten Verwendung finden.

Weiterhin können Lösungen in pflanzlichen, tierischen oder synthetischen Ölen oder Fetten und anderen verdunstungshemmenden Lösungsmitteln mit niedrigem Dampfdruck (wie z.B. Dioctylphthalat) zum Zwecke der Wirkungsverlängerung hergestellt werden.

Des weiteren ist es möglich, die Wirkstoffe in oder an natürliche oder synthetische feste Träger wie Gummi, Kork, Zellulose, Kunststoffe, gemahlene Kohle, Holzmehl, Silikate, Bimskies, gebrannten Ton, Kork oder ähnliche feste Trägerstoffe zu binden oder in speziellen Kapselformulierungen oder Kunststoffbehältern einzusetzen, um so eine gleichmässige Abgabe an die Luft

über längere Zeiträume hinweg zu erreichen. Ausserdem können (1) und (2) aus geeigneten Behältern (Kapillaren oder anderen Gefässen) durch enge Öffnungen zur Verdunstung gebracht werden, wodurch über längere Zeiträume hinweg besonders gleichmässige Duftkonzentrationen erzielt werden.

Der Gehalt dieser Zubereitungen an dem oder den Wirkstoff(en) kann innerhalb weiter Grenzen schwanken. Generell kann das Verhältnis Wirkstoff:Zusatzstoff im Bereich von 10:1 bis $1:10^6$ liegen. In Kapselformulierungen oder anderen geeigneten Behältern können z.B. die Wirkstoffe in reiner, unverdünnter Form angewendet werden und ihr Gewichtsanteil, bezogen auf die Gesamtformulierung, sehr hoch sein und bis zu 90% betragen. Im allgemeinen genügen jedoch sehr geringe Wirkstoffkonzentrationen in den Zubereitungen, um eine Lockwirkung auf P. flammea-Männchen auszuüben. Bevorzugt ist ein Mengenverhältnis Wirkstoff:Zusatzstoff von 10:1 bis 1:1000.

In den Zubereitungen können die Verbindungen (1) und (2) entweder allein oder kombiniert vorliegen. Bei Anwendung von Kombinationen kann das Mischungsverhältnis (1):(2) im Bereich von 1:1000 bis 1000:1 schwanken; bevorzugt sind jedoch Mischungsverhältnisse von 1:100 bis 100:1, insbesondere 1:10 bis 10:1.

Die Mittel können in verschiedener Weise angewendet werden. Zum Beispiel kann man Fallen auslegen, die mit (1) und/oder (2) bzw. einer Formulierung derselben imprägniert sind. Hierdurch kann man die genaue Populationsdichte von P. flammea bestimmen und, sobald diese eine kritische Grenze erreicht hat, eine Bekämpfung mit konventionellen Methoden durchführen.

Für diese Methode eignen sich am besten Formulierungen mit schwerflüchtigen Zusatzstoffen, die die Wirkstoffe protahiert abgeben, wie Gummi, Zellstoff, Wachse, Polymerisate oder verdunstungshemmende, schwerflüchtige Öle oder Paraffine, sowie Formulierungen in Kapseln oder anderen Behältern (Kapillaren), die den Lockruf entweder durch ihre Wandung oder durch enge Öffnungen abgeben. Die Wirkstoffkonzentration liegt hier im allgemeinen im Bereich von 1:100 bis $1:10^6$.

Man kann ferner die Wirkstoffe mit einem Kontakt- oder Frassinsektizid kombinieren und auf diese Weise die angelockten Männchen direkt vernichten. Die Wirkstoffkonzentrationen liegen hierbei in der gleichen Grössenordnung wie oben.

Schliesslich kann man die Wirkstoffe auch in vergleichsweise hohen Konzentrationen ausbringen, um die Männchen durch Desorientierung und Konfusion an der Paarung zu hindern. Hierfür werden im allgemeinen Formulierungen mit höheren Wirkstoffgehalten (10:1 bis 1:1000) eingesetzt.

Beispiel 1

Leimfallen mit eingelegten Gummiködern von je 500 mg Gewicht, die mit je 1 mg der in n-Hexan gelösten Verbindungen (1) und (2) imprägniert waren, wurden während der Monate März–Mai 1978 in einer Kiefernschonung ausgelegt. Nach Abschluss des Versuches war das Ergebnis wie folgt:

| | Männchen/Falle |
|---|---|
| (Z)9-Tetradecenylacetat (1) | 29 |
| (Z)9,(E)12-Tetradecadienylacetat (2) | 19 |

Weibchen wurden nicht gefangen.

Zur Kontrolle wurden Fallen ausgelegt, die mit insgesamt 148 strukturell verwandten ungesättigten $C_{10}$- bis $C_{16}$-Kohlenwasserstoffen belegt waren. In keiner dieser Fallen wurde ein P. flammea-Männchen gefunden.

Damit war erwiesen, dass (1) und (2) sich wie Sexual-Pheromone von P. flammea verhalten.

Beispiel 2

In einer zweiten Versuchsserie wurden Leimfallen mit (Z)9-Tetradecenylacetat (1) und (Z)9,(E)12-Tetradecadienylacetat (2) wie oben beschrieben zu je 1 mg ausgelegt und ab Beginn der Flugzeit von P. flammea kontinuierlich beobachtet. Es sollte die Eignung der erkannten Lockstoffe in Fallen zur Bestimmung des Maximums des Fluges untersucht werden.

Es konnte festgestellt werden (Tab. 1), dass sich beide Verbindungen gleichermassen eignen, das Maximum des Fluges von P. flammea zu bestimmen.

Tabelle 1

Fangzahlen von P.flammea in Leimfallen; beködert mit je 1 mg Substanz (1) bzw. (2)

| Datum | (1) | (2) |
|---|---|---|
| 08.03.78 | – | 1 |
| 15.03.78 | – | 1 |
| 17.03.78 | – | 1 |
| 23.03.78 | 1 | – |
| 29.03.78 | – | 1 |
| 31.03.78 | 1 | – |
| 05.04.78 | 11 | 4 |
| 07.04.78 | 4 | 5 |
| 12.04.78 | 7 | 2 |
| 14.04.78 | 5 | 3 |
| 21.04.78 | – | 1 |
| 26.04.78 | 1 | 2 |
| 30.05.78 | – | 1 |
| 17.06.78 | – | 2 |

Es zeigte sich ausserdem, dass Unterschiede in der Lockwirkung gegenüber den Männchen in Abhängigkeit von der Jahreszeit bestehen, denn beide Verbindungen wiesen zu Beginn der Flugzeit unterschiedliche Fangeigenschaften auf. Nach den Fangergebnissen eignen sich Pheromonmischungen mit einem Gehalt von (2) in den angegebenen Konzentrationen besonders für die Früherkennung des Fluges, während Köder mit einem Gehalt an (1) vor allem für die scharfe Erkennung des Flugmaximums geeignet sind.

**Patentanspruch**

Verwendung von (Z)9-Tetradecenylacetat und/oder Z(9),(E)12-Tetradecadienylacetat zur Anlockung und Bekämpfung von Panolis flammea.

**Claim**

A method of attracting and combatting Panolis flammea by applying (Z)9-tetradecenyl acetate and/or (Z)9,(E)12-tetradecadienyl acetate.

**Revendication**

Utilisation d'acétate de tétradécényl-(Z)9 et/ou d'acétates de tétradécadiényl-(Z)9 et de tétradécadiényl-(E)12 pour attirer et combattre Panolis flammea.